# EUROPEAN PATENT APPLICATION

(11) **EP 1 437 386 A1**
(43) Date of publication of application: **14.07.2004**
(21) Application number: 02800265.7
(22) Date of filing: 27.09.2002
(51) Int. Cl.: C09B 23/00

(54) **ASYMMETRIC CYANINE DYE**

(30) Priority: 27.09.2001 JP 2001295485
(71) Applicant: Fuji Photo Film Co. Ltd., Kanagawa 250-0193 (JP)
(72) Inventor: KAWAKAMI, Masayuki, Minami-ashigara-shi, Kanagawa 250-0193 (JP)
(74) Representative: HOFFMANN - EITLE
(86) International application number: PCT/JP2002/010033
(87) International publication number: WO 2003/029356

(57) **Abstract**

A compound represented by the general formula (I) or a salt thereof [wherein R¹, R², R⁴, and R⁵ represent an alkyl group or an aryl group, and R¹ and R² and/or R⁴ and R⁵ may bind to each other to form a ring; R³ represents hydrogen atom or sulfo group; R⁶, R⁷, R⁸, and R⁹ represent hydrogen atom, a halogen atom, an alkyl group, an alkoxyl group, an amino group, nitro group or cyano group; X¹ and X² represent an alkyl group or an aryl group; m¹ to m³ represents 0 or 1; L¹ to L⁷ represent a methine group, and when two or more of methine groups among the aforementioned methine groups have a substituent, the substituents may bind to each other to form a ring; M represents hydrogen atom, a metal or a quaternary ammonium salt; and n represents an integer of 1 to 7 required to neutralize a charge]. The compound can be utilized as a novel cyanine dye useful as an infrared photosensitive dye that give no bad influence on photographic characteristics of a photographic emulsion and gives reduced residual color after development.

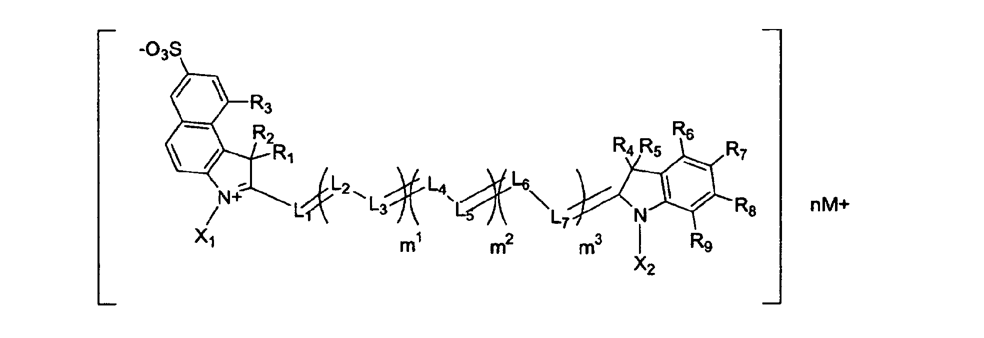

## Description

### Technical Field

The present invention relates to asymmetric cyanines having a sulfobenzindolenine and indolenine moieties.

### Background Art

In silver halide photographic light-sensitive materials, a photographic emulsion layer or another layer is often colored for the purpose of absorbing lights of a specific wavelength. When it is required to control spectral composition of lights to be entered into a photographic emulsion layer, a colored layer is provided distant from a support remoter than the photographic emulsion layer on a photographic light-sensitive material. Such a colored layer is called as a filter layer. In order to prevent blur of images, i.e., halation, which is caused by lights scattered during or after transmission through a photographic emulsion layer, then reflected by the interface of the emulsion layer and a support or a surface of the light-sensitive material on the side opposite to the emulsion layer side and reentered into the emulsion layer, a colored layer is provided between the photographic emulsion layer and the support or on the side opposite to the support and photographic emulsion layer. Such a colored layer is called as an antihalation layer. As for a laminated color light-sensitive material, antihalation layers may be provided between layers. In order to prevent reduction of image sharpness due to scattering of lights in the photographic emulsion layer (this phenomenon is generally called as irradiation), the photographic emulsion layer may also be colored.

These layers that should be colored often consist of hydrophilic colloid, and therefore a water-soluble dye is usually added to the layers for the coloration. The dye needs to meet the following requirements.
(1) The dye has appropriate spectral absorption suitable for a purpose of use.
(2) The dye is inert in the sense of photographic chemistry. That is, the dye will not give any bad influence in a chemical sense on the performance of silver halide photographic light-sensitive materials, for example, reduction of sensitivity, regression of latent images or fog.
(3) The dye is bleached or removed by dissolution during photographic processing steps to leave no coloration harmful on processed photographic light-sensitive materials.
(4) The dye has superior stability with passage of time in a solution or a photographic material.

As dyes satisfying these requirements, many dyes are known which absorb visible lights or ultraviolet rays. These dyes are suitable for an image improvement purpose in conventional photographic elements sensitized for a wavelength of 700 nm or less, and in particular, triarylmethane and oxonol dyes are widely used in relation to this purpose.

For recording materials sensitized for an infrared wavelength, e.g., photographic light-sensitive materials as recording materials for output of a near-infrared laser, a development of an antihalation dye and irradiation neutralizing dye that absorb lights in an infrared region of a spectrum has recently been desired. For example, as one of light exposure methods of such photographic light-sensitive materials as described above, the so-called scanner type image forming method is known, which comprises the steps of scanning an original and exposing a silver halide photographic light-sensitive material on the basis of image signals obtained by the scanning, and then forming a negative image or positive image corresponding to the image of the original. In this method, a semiconductor laser is most preferably used as a light source for the scanner type recording. The semiconductor laser is compact and inexpensive, and its modulation is easy. Moreover, said laser has a longer lifetime compared with other He-Ne lasers, argon lasers and the like. Furthermore, since the aforementioned laser emits a light in an infrared region, it has an advantage that when a light-sensitive material having photosensitivity for an infrared region is used, a bright is available and handling workability is improved.

However, since no appropriate dye is available that absorb lights in an infrared region of a spectrum and satisfies the aforementioned requirements (1), (2), (3) and (4), especially the requirements (2) and (3), there are a few superior light-sensitive materials with high photosensitivity for the infrared region in which halation and irradiation are prevented. Therefore, the advantageous characteristics of the semiconductor laser having the excellent performance as mentioned above cannot be fully enjoyed.

As state of the art relating to asymmetric cyanines having a benzindolenine moiety having one or two sulfo groups and an indolenine moiety, cyanine dyes having five or more acidic substituents in a molecule are disclosed in Japanese Patent Unexamined Publication (KOKAI) (Hei)No. 5-307233. However, the substituents on the indolenine moiety are limited to sulfo group and carboxyl group. No cyanine dye having a substituent on a methine chain has been known so far.

### Disclosure of the Invention

An object of the present invention is to provide a dye that meets the aforementioned requirements (1), (2), (3) and (4). More specifically, the object of the present invention is to provide a novel cyanine dye useful as an infrared photosensitive dye that does not give any bad influence on photographic characteristics of a photographic emulsion and gives reduced residual color after development. Moreover, it is also an object of the present invention to provide a silver halide photographic light-sensitive material containing said compound.

The inventors of the present invention conducted various researches to achieve the aforementioned objects. As a result, they found that the compounds represented by the following general formula (I) and salts thereof had the aforementioned characteristics and were useful for the production of silver halide photographic light-sensitive materials. The present invention was achieved on the basis of the above findings.

The present invention thus provides compounds represented by the following general formula (I) and salts thereof: 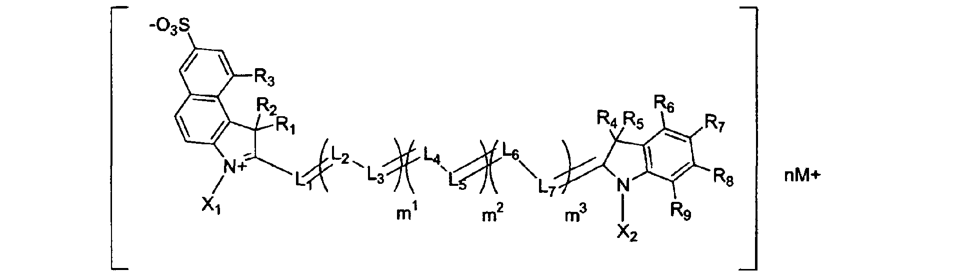 wherein R¹, R², R⁴, and R⁵ independently represent a substituted or unsubstituted alkyl group having 1 to 10 carbon atoms or a substituted or unsubstituted aryl group, and R¹ and R² and/or R⁴ and R⁵ may bind to each other to form a ring; R³ represents hydrogen atom or sulfo group; R⁶, R⁷, R⁸, and R⁹ independently represent hydrogen atom, a halogen atom, a substituted or unsubstituted alkyl group having 1 to 6 carbon atoms, a substituted or unsubstituted alkoxyl group having 1 to 6 carbon atoms, a substituted or unsubstituted amino group, nitro group or cyano group, and two of adjacent groups selected from the group consisting of R⁶, R⁷, R⁸ and R⁹ may bind to each other to form a ring; X¹ and X² independently represent a substituted or unsubstituted alkyl group having 1 to 10 carbon atoms or a substituted or unsubstituted aryl group; m¹ represents 0 or 1; m² represents 0 or 1; m³ represents 0 or 1; L¹, L², L³, L⁴, L⁵, L⁶, and L⁷ independently represent a substituted or unsubstituted methine group, and when two or more of methine groups among the aforementioned methine groups have a substituent, the substituents may bind to each other to form a ring; M represents hydrogen atom, a metal or a quaternary ammonium salt; and n represents an integer of 1 to 7 required to neutralize the charge.

In the aforementioned general formula (I), it is preferred that m¹, m² and m³ all represent 1, and it is preferred that R³ is sulfo group. It is more preferred that m¹, m² and m³ all represent 1, and R³ is sulfo group. Preferred compounds represented by the aforementioned general formula (I) or salts thereof include the compounds or salt thereof wherein at least one of L¹, L², L³, L⁴, L⁵, L⁶, and L⁷ is a methine group having a substituent, and more preferred compounds represented by the aforementioned general formula (I) or salts thereof are the compounds and salts thereof wherein m¹, m² and m³ all represent 1, and at least one of L¹, L², L³, L⁴, L⁵, L⁶, and L⁷ is a methine group having a substituent.

From another aspect, the present invention provides silver halide photographic light-sensitive materials containing the compounds represented by the aforementioned general formula (I) or salts thereof. Moreover, the present invention also provides use of the compounds represented by the aforementioned general formula (I) or salts thereof for the manufacture of silver halide photographic light-sensitive materials.

### Best Mode for Carrying out the Invention

The alkyl group having 1 to 10 carbon atoms represented by R¹, R², R⁴, or R⁵ may be a straight, branched, or cyclic alkyl group or an alkyl group consisting of a combination thereof (in the specification, other alkyl groups and alkyl moieties of substituents containing the alkyl moiety have the same meaning unless otherwise specifically mentioned). As the unsubstituted alkyl group, for example, methyl group, ethyl group, propyl group, butyl group, and hexyl group can be used. The number, types, and substituting positions of the substituents which exist on the substituted alkyl group are not particularly limited. As the substituted alkyl group, for example, a sulfoalkyl group, a carboxylalkyl group, a hydroxyalkyl group, an alkoxyalkyl group, an aminoalkyl group, a halogenoalkyl group, a cyanoalkyl group, an aryl-substituted alkyl group, and a heteroaryl-substituted alkyl group can be used.

The aryl group represented by R¹, R², R⁴, or R⁵ may be a monocyclic aryl group or condensed ring aryl group, and a 6- to 14-membered aryl group, more preferably a 6- to 10-membered aryl group, can be preferably used (in the specification, aryl groups and aryl moieties of substituents containing the aryl moiety have the same meaning unless otherwise specifically mentioned). Preferred examples of the aryl group include phenyl group and naphthyl group, and a more preferred example includes phenyl group. As the substituted aryl group, a sulfophenyl group, a hydroxyphenyl group and an aminophenyl group can be used.

R¹ and R², and R⁴ and R⁵ may bind to each other to form a ring. Examples of the ring to be formed include, for example, cyclopentyl ring, cyclohexyl ring and the like. R¹, R², R⁴, and R⁵ preferably represent methyl group or ethyl group, more preferably methyl group. As the alkyl group or aryl group represented by X¹ or X², the alkyl groups and aryl groups explained for R¹, R², R⁴, and R⁵ can be used.

When the alkyl group, alkoxyl group, or amino group represented by R⁶, R⁷, R⁸, or R⁹ has a substituent, for example, a halogen atom selected from fluorine atom, chlorine atom, bromine atom and iodine atom; a C₁₋₆ alkyl group such as methyl group, ethyl group, n-propyl group, isopropyl group, n-butyl group, sec-butyl group and tert-butyl group; a halogenated C₁₋₆ alkyl group such as trifluoromethyl group; a C₁₋₆ alkoxyl group such as methoxy group, ethoxy group, n-propoxy group, isopropoxy group, n-butoxy group, sec-butoxy group and tert-butoxy group; a C₁₋₆ alkylenedioxy group such as methylenedioxy group and ethylenedioxy group; unsubstituted amino group; a C₁₋₆ alkyl-substituted amino group such as methylamino group, dimethylamino group and ethylamino group; nitro group; cyano group and the like can be used as the substituent. For example, 1 to 4 of the aforementioned substituents may exist. Positions of the substituents are not limited, and when two or more substituents exist, they may be the same or different. Two of adjacent groups selected from the group consisting of R⁶, R⁷, R⁸, and R⁹ may bind to each other to form a ring. The ring to be formed may be saturated or unsaturated, and the ring may be a hydrocarbonic or heterocyclic ring. For example, R⁶ together with R⁷, R⁷ together with R⁸, and R⁸ together with R⁹ may bind to form an aromatic ring such as benzene ring or an aromatic heterocyclic ring such as pyridine ring.

L¹, L², L³, L⁴, L⁵, L⁶, and L⁷ independently represent a substituted or unsubstituted methine group. Symbols m¹, m², and m³ independently represent 0 or 1, and it is preferred that m¹, m² and m³ all represent 1. Examples of the substituent of the methine group include a substituted or unsubstituted alkyl group, a halogen atom, a substituted or unsubstituted aryl group, a lower alkoxyl group and the like. Specific examples of the substituted aryl group include 4-chlorophenyl group and the like. The lower alkoxyl group is preferably an alkoxyl group having 1 to 6 carbon atoms, and the group may be a linear or branched alkoxyl group. Specific examples include methoxy group, ethoxy group, propoxy group, butoxy group, tert-butoxy group, pentyloxy group and the like, and preferred are methoxy group and ethoxy group. As the substituent of the methine group, methyl group and phenyl group can be preferably used.

When the methine group represented by L¹, L², L³, L⁴, L⁵, L⁶, or L⁷ has a substituent, substituents on the methine groups may bind together to form a ring. Preferably, substituents on the methine groups may bind together to form a ring including three of continuous methine groups selected from L¹, L², L³, L⁴, L⁵, L⁶, and L⁷. Moreover, the ring formed as described above may further form a condensed ring with a ring including three of continuous methine groups selected from L¹, L², L³, L⁴, L⁵, L⁶, and L⁷. Examples of the compounds, wherein substituents on the methine groups bind together to form a ring including three of continuous methine groups selected from L¹, L², L³, L⁴, L⁵, L⁶ and L⁷, include the compounds wherein a 4,4-dimethylcyclohexene ring including L³, L⁴, and L⁵ is formed. A particularly preferred partial structure consisting of a conjugated methine chain, including a ring constituted by methine groups selected from L¹, L², L³, L⁴, L⁵, L⁶ and L⁷, is a group represented by the following general formula (a). 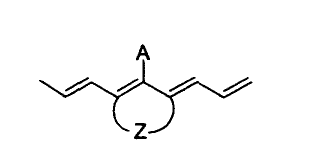 wherein Z represents a nonmetallic atom group required to form a 5- or 6-membered ring, and A represents hydrogen atom or a monovalent group.

Examples of the nonmetallic atom group required to form a 5- or 6-membered ring, which is represented by Z, include, for example, carbon atom, nitrogen atom, oxygen atom, hydrogen atom, sulfur atom, a halogen atom (fluorine atom, chlorine atom, bromine atom, iodine atom) and the like. Examples of the 5- or 6-membered ring in the partial structure represented by the general formula (a) include, for example, cyclopentene ring, cyclohexene ring, 4,4-dimethylcyclohexene ring and the like, and preferred are cyclohexene ring and cyclopentene ring.

Examples of the monovalent group represented by A include a substituted or unsubstituted alkyl group, a substituted or unsubstituted aryl group, a substituted or unsubstituted aralkyl group, a substituted or unsubstituted lower alkoxyl group, a substituted or unsubstituted amino group, a substituted or unsubstituted alkylcarbonyloxy group (acetoxy group and the like), a substituted or unsubstituted alkylthio group, a substituted or unsubstituted arylthio group, cyano group, nitro group, a halogen atom and the like.

Specific examples of the aralkyl group represented by A include benzyl group, 2-phenylethyl group, 3-phenylpropyl group and the like, and examples of the substituent of the aralkyl group include, for example, sulfo group, carboxyl group, hydroxyl group, a substituted or unsubstituted alkyl group, an alkoxyl group, a halogen atom and the like. Specific examples of the amino group having a substituent represented by A include, for example, an alkylamino group (methylamino group, ethylamino group and the like), a dialkylamino group (dimethylamino group, diethylamino group and the like), phenylamino group, diphenylamino group, methylphenylamino group and a cyclic amino group (morpholino group, imidazolidino group, ethoxycarbonylpiperazino group and the like), and when these groups have a substituent, sulfo group, carboxyl group and the like may be used as the substituent. Specific examples of the alkylthio group represented by A include phenylthio group, naphthylthio group and the like, and specific examples of the substituent of the alkylthio group include sulfo group, carboxyl group and the like.

Preferred examples of the monovalent group represented by A include phenylamino group, diphenylamino group, ethoxycarbonylpiperazino group, an arylthio group and the like. Symbol A is preferably a monovalent group having a sulfonic acid group, and it is most preferred that A is selected from the group consisting of phenylamino group, diphenylamino group, ethoxycarbonylpiperazino group and carboxyphenylthio group and has sulfonic acid group.

Symbol M represents hydrogen atom, a metal or a quaternary ammonium salt. Examples of the metal include an alkali metal such as sodium and potassium, an alkaline earth metal such as magnesium and calcium, and examples of the ammonium salt include an ammonium salt, triethylammonium salt, tributylammonium salt, a salt of an amino acid such as lysine and arginine. However, M is not limited to these examples.

The compounds of the present invention may have one or more asymmetric carbons depending on the types of substituents. Furthermore, a sulfur atom may serve as an asymmetric center. Arbitrary optical isomers based on one or more asymmetric carbons in optically pure forms, any mixtures of such optical isomers, racemates and diastereoisomers based on two or more asymmetric carbon atoms, any mixtures of such diastereoisomers and the like all fall within the scope of the present invention.

Specific examples of the compounds of the present invention will be shown below. However, the present invention is not limited to the following compounds.

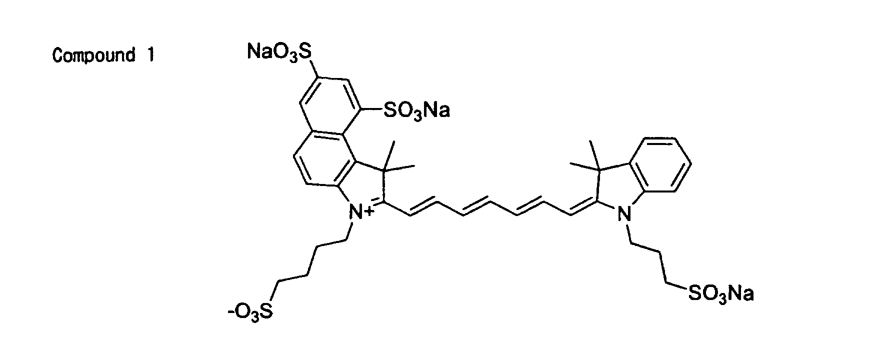

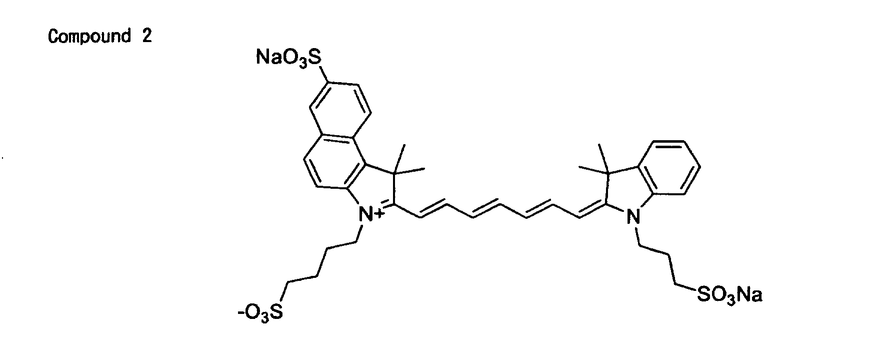

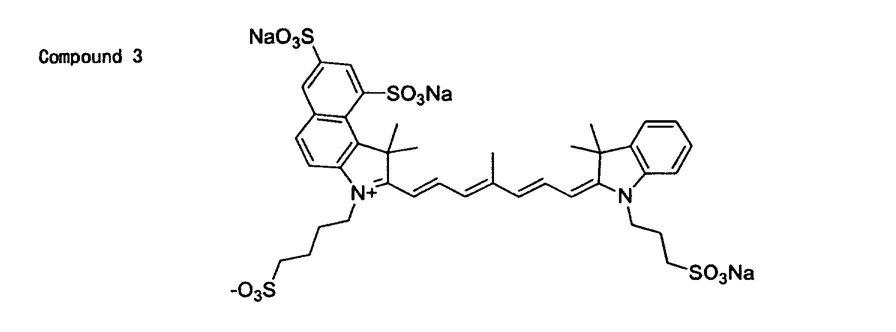

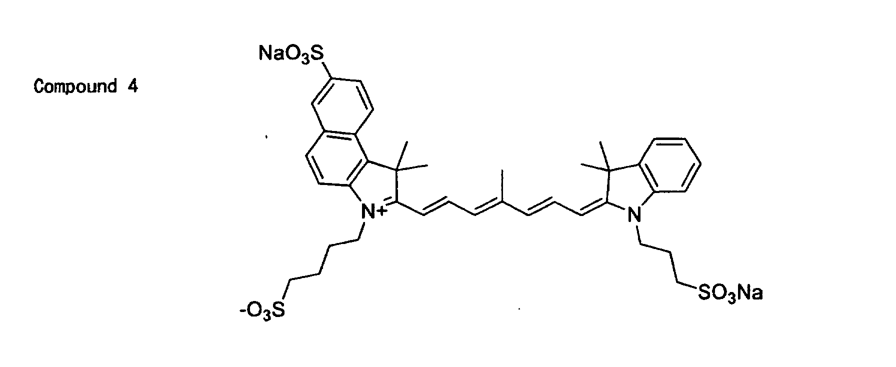

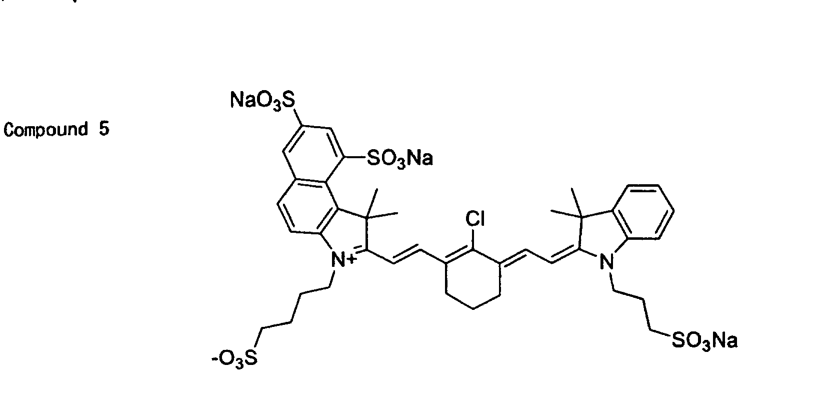

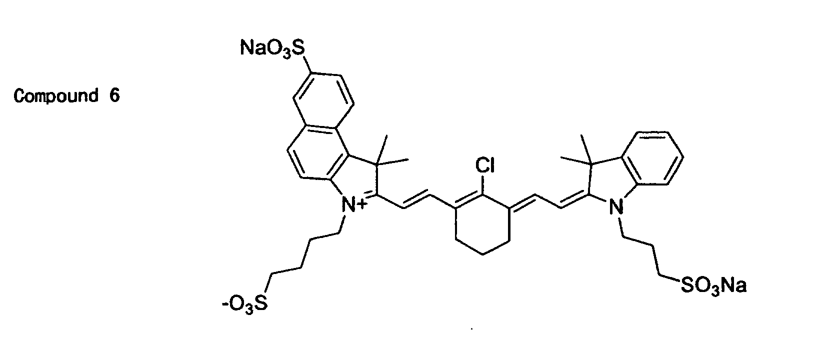

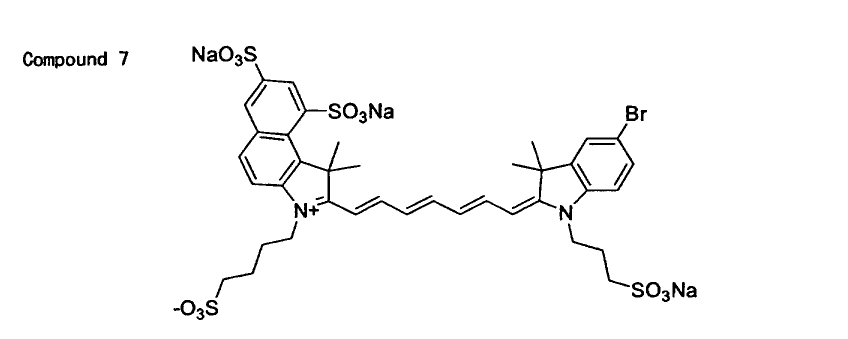

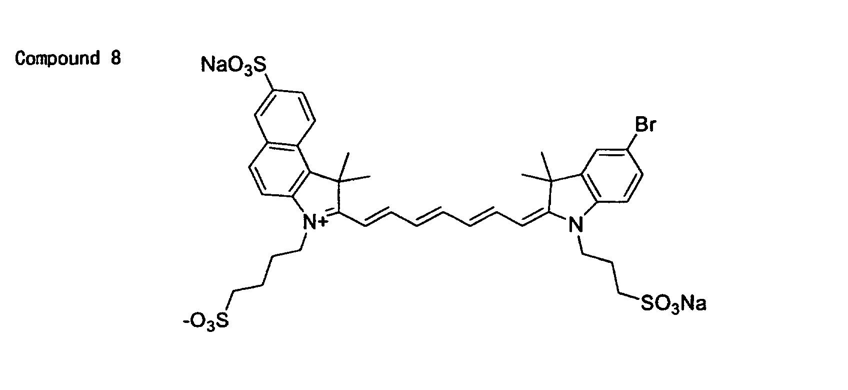

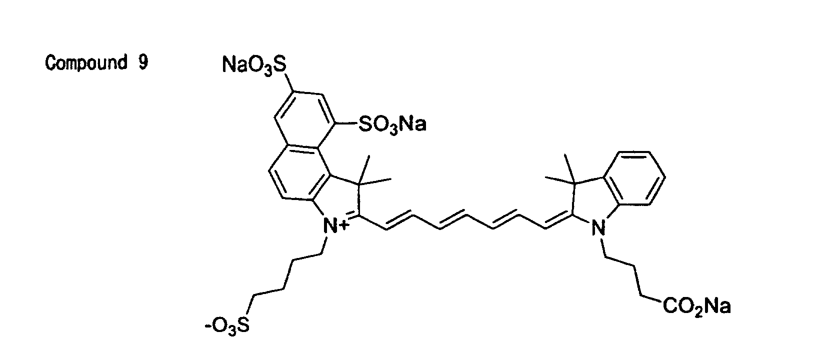

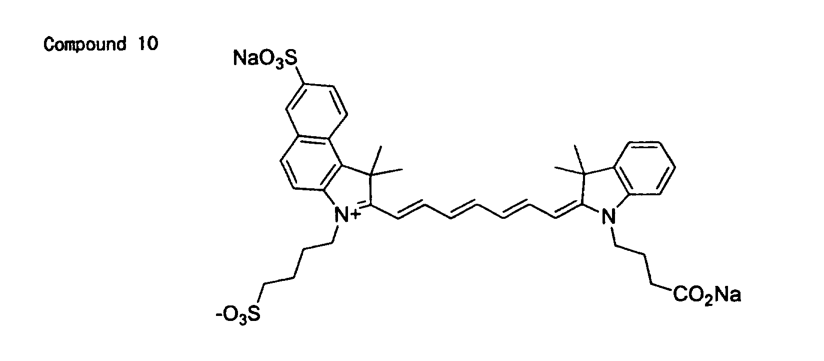

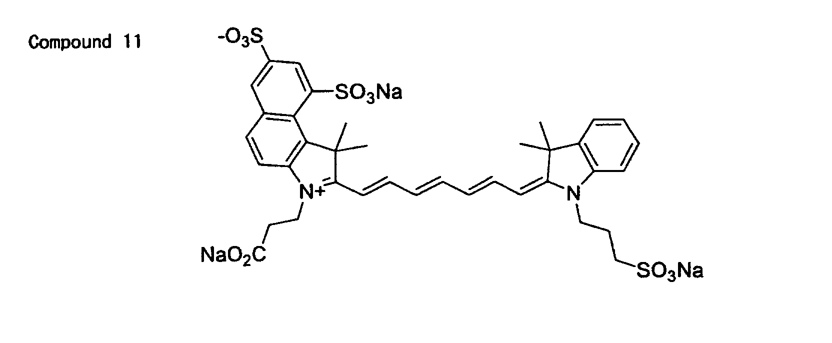

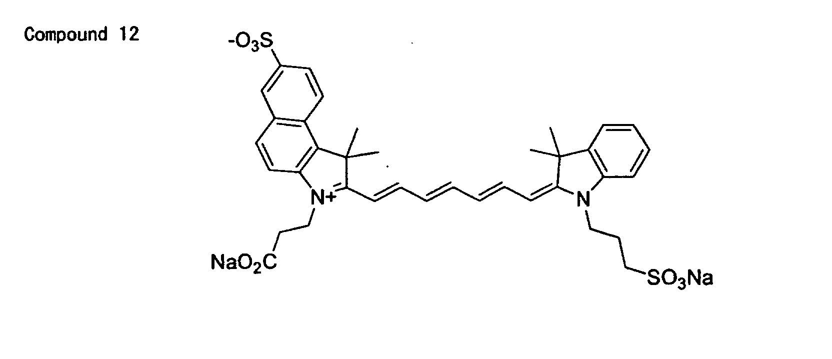

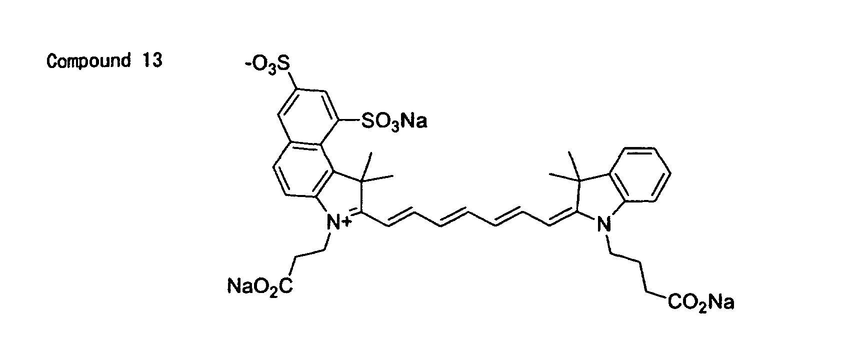

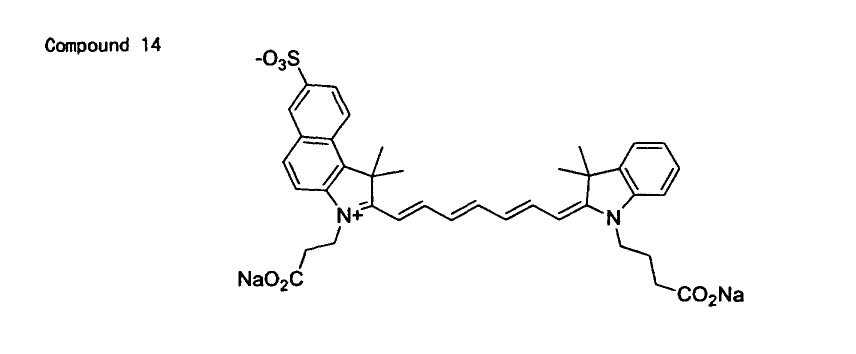

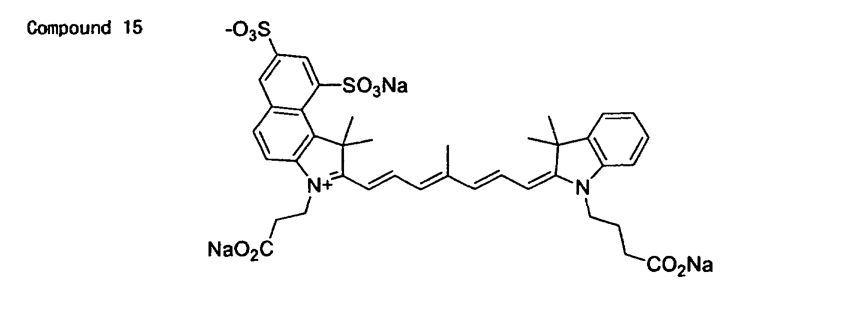

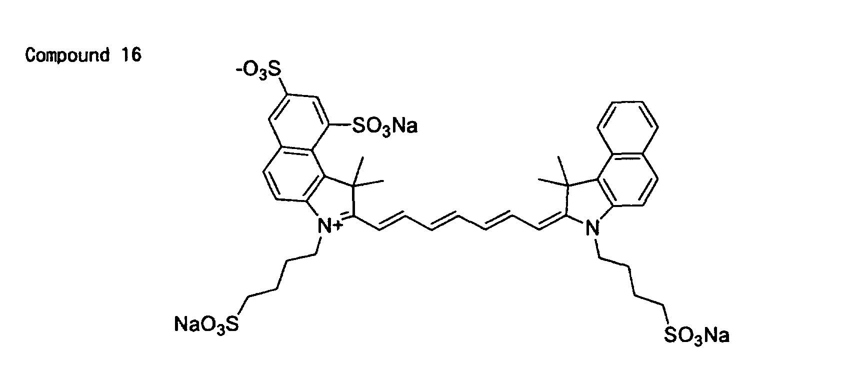

The cyanine dyes represented by the aforementioned general formula (I) can be synthesized according to the known methods for producing cyanine dye compounds described in F. M. Hamer, The Cyanine Dyes and Related Compounds, John Wiley and Sons, New York, 1964; Cytometry, 11, pp.416-430, 1990; Cytometry, 12, pp.723-730, 1990; Bioconjugate Chem., 4, pp.105-111, 1993; Anal. Biochem., 217, pp.187-204, 1994; Tetrahedron 45, pp.4845-4866, 1989; European Patent Publication Nos. 0591820A1 and 0580145A1, and they can also be semisynthesized from commercially available cyanine dyes by a suitable known procedure. More specifically, they can be synthesized by a reaction of a dianyl compound and a heterocyclic quaternary salt.

The method for producing the cyanine dyes represented by the aforementioned general formula (I) is not particularly limited, and they can be synthesized via various kinds of synthetic routes. Specific production methods are disclosed in the examples of the specification for typical examples of the compounds of the present invention, and therefore, those skilled in the art can synthesize compounds falling within the scope of the aforementioned general formula (I) by referring to the methods described in the examples, and by adding suitable alterations or modifications to the methods, if necessary, and further, by suitably selecting starting materials and regents. In the synthesis, one or more steps of various kinds of condensations, additions, oxidations, reductions and the like can be combined. These are detailed in publications. For example, various kinds of methods described in "Jikken Kagaku Koza (Lecture of Experimental Chemistry)", published by Maruzen Co., Ltd., each separate volume included in each of the first to 4th editions can be used) as unit operations and raw material compounds can be suitably used.

For example, in these production methods, when a defined group changes under conditions of a desired reaction step, or it is unsuitable for carrying out a desired reaction step, the step may be efficiently carried out by using methods commonly used in the synthetic organic chemistry such as means of protection and deprotection of a functional group or treatments of oxidation, reduction, hydrolysis and the like In the aforementioned steps, synthetic intermediates and target compounds can be separated and purified by purification methods commonly used in the synthetic organic chemistry, for example, filtration, extraction, washing, desiccation, concentration, recrystallization, various kinds of chromatographies and the like Synthetic intermediates can also be used for subsequent steps without performing particular isolation.

The method of incorporating the compounds represented by the aforementioned general formula (I) or salts thereof according to the present invention into silver halide photographic light-sensitive materials is not particularly limited, and they can be suitably incorporated by ordinary means used in the field of silver halide photographic light-sensitive material. Performance of silver halide photographic light-sensitive materials containing the compounds or salt thereof according to the present invention can also be confirmed by ordinary methods. Specific means for the evaluation are disclosed in test examples in the following examples, and therefore, by referring to the test examples, those skilled in the art can appropriately use the compounds or salt thereof according to the present invention for production of silver halide light-sensitive materials and thereby produce silver halide photographic light-sensitive materials with desired performance.

### Examples

The present invention will be more specifically explained by referring to the following examples. However, the scope of the present invention is not limited to these examples. The numbers of the compounds used in the examples correspond to the compound numbers of the preferred compound exemplified above.

### Example 1: Synthesis of Compound 1

The synthetic route of Compound 1 is shown below.

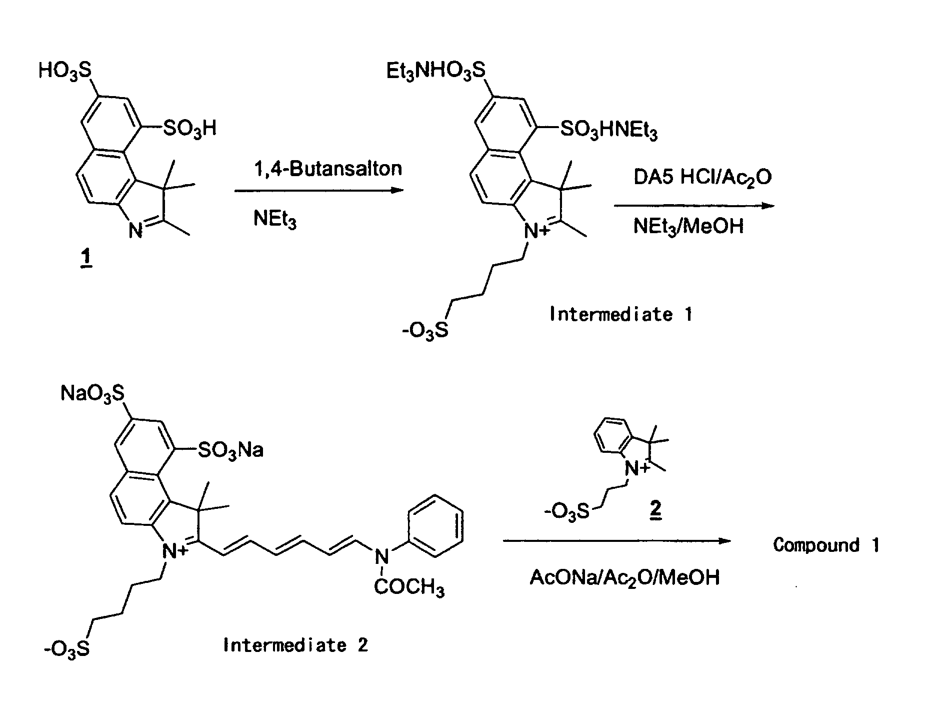

### Synthesis of Intermediate 1

4,5-Disulfobenzindolenine (1) (7.9 g, 0.02 mol), triethylamine (4.1 g, 0.04 mol) and sulfolane (10 mL) were stirred for 10 minutes with heating at 100°C, then added with 1,4-butanesultone (5.5 g, 0.04 mol) and stirred for 12 hours with heating at 150°C. After the reaction, the reaction mixture was added with 2-propanol (100 mL) and cooled to room temperature, and the produced crystals were collected by filtration to obtain Intermediate 1.
Amount: 4.9 g (yield: 35%)

### Synthesis of Intermediate 2

Intermediate 1 (1.06 g, 1.5 mmol) obtained above and 1,7-diaza-1,7-diphenyl-1,3,5-heptatriene monohydrochloride (0.43 g, 1.5 mmol) were dissolved in methanol (10 mL), added with triethylamine (0.63 mL, 4.5 mmol) and acetic anhydride (0.84 g, 9.0 mmol) and stirred for 10 minutes at room temperature. The reaction mixture was added dropwise to ethyl acetate (200 mL), and the produced crystals were collected by filtration. The crystals were passed through a column filled with a sodium sulfonate type cation exchange resin, Amberlite IR-120B (produced by ORGANO CORP., developing solvent: methanol) and after the solvent was evaporated under reduced pressure, further purified by column chromatography using Sephadex (LH-20, produced by Pharmacia, developing solvent: methanol) to obtain Intermediate 2.
Amount: 0.42 g (yield: 38%)

### Synthesis of Compound 1

Intermediate 3 (120 mg, 0.2 mmol) obtained above and 1-(3-sulfopropyl)-2,3,3-trimethylindolenium (2) (90 mg, 0.3 mmol) were dissolved in a mixed solvent of methanol (3 mL) and water (2 mL), added with acetic anhydride (100 mg, 1.0 mmol) and sodium acetate (80 mg, 1.0 mmol) and stirred overnight at room temperature. The reaction mixture was purified by column chromatography using Sephadex (LH-20, produced by Pharmacia, developing solvent: methanol) and then further purified by reverse phase preparative TLC (produced by Merck, developing solvent: methanol:water = 1:1) to obtain Compound 1.
Amount: 12 mg (yield: 8%)
λ max (DMSO) = 767 nm ( ε = 1.1 x 10⁵)

### Test Example 1

### 1. Preparation of silver halide emulsion

To a vessel containing gelatin (34 g) dissolved in water (850 mL) and warmed to 65°C, sodium chloride (1.7 g), potassium bromide (0.1 g) and Compound (A) (HO(CH₂)₂-S-(CH₂)₂-S-(CH₂)₂-OH, 70 mg) were added. Then, an aqueous solution (500 mL) containing silver nitrate (170 g), potassium hexachloroiridate(III) in such an amount that a molar ratio of iridium on the basis of silver halide in the completed emulsion became 5 x 10⁻⁷, and an aqueous solution (500 mL) containing sodium chloride (12 g) and potassium bromide (98 g) were added by the double jet method to prepare monodispersed cubic silver chlorobromide grains having a mean grain size of 0.35 *µ*m. After desalting, the resulting emulsion was added with gelatin (50 g), adjusted to pH 6.5 and pAg 8.1, then added with sodium thiosulfate (2.5 mg) and chloroauric acid (5 mg). The emulsion was chemically sensitized at 65°C, then added with 4-hydroxy-6-methyl-1,3,3a,7-tetrazaindene (0.2 g) and solidified by rapid cooling (Emulsions A).

Then, monodispersed cubic silver chlorobromide grains having a mean grain size of 0.3 *µ*m were prepared in the same manner as that used for Emulsion A, except that the aforementioned gelatin solution was warmed to 40°C. After desalting, the emulsion was added with gelatin (50 g) and adjusted to pH 6.5 and pAg 8.1. This emulsion was added with sodium thiosulfate (2.5 mg) and chloroauric acid (5 mg), chemically sensitized at 65°C, then added with 4-hydroxy-6-methyl-1,3,3a,7-tetrazaindene (0.2 g) and solidified by rapid cooling to prepare Emulsions B.

### 2. Preparation of coating solution for emulsion layer

Emulsion A and Emulsion B were mixed at a mass ratio of 1:1 and added with the additives mentioned below in the indicated amounts per 1 mole of the silver halide to prepare a coating solution for emulsion layer.

| (Composition of coating solution for emulsion layer) | |
|---|---|
| a. Spectral sensitization dye [2] | 1.0 x 10⁻⁴ mol |
| b. Supersensitizer [3] | 0.7 x 10⁻³ mol |
| c. Storage improver [4] | 1 x 10⁻³ mol |
| d. Polyacrylamide (molecular weight: 40,000) | 7.5 g |
| e. Dextran | 7.5 g |
| f. Trimethylolpropane | 1.6 g |
| g. Polystyrenesulfonate Na | 1.2 g |
| h. Poly(ethyl acrylate/methacrylic acid) latex | 12 g |
| i. N,N'-Ethylenebis(vinylsulfoneacetamide) | 3.0 g |
| j. 1-Phenyl-5-mercaptotetrazole | 50 mg |

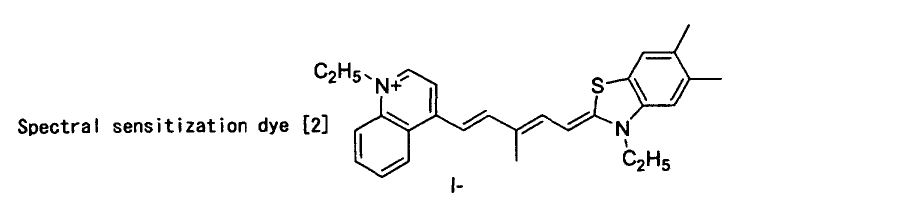

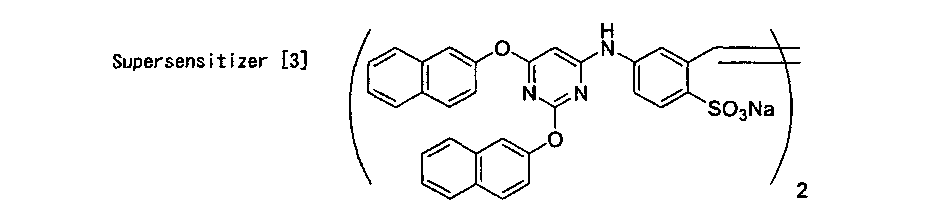

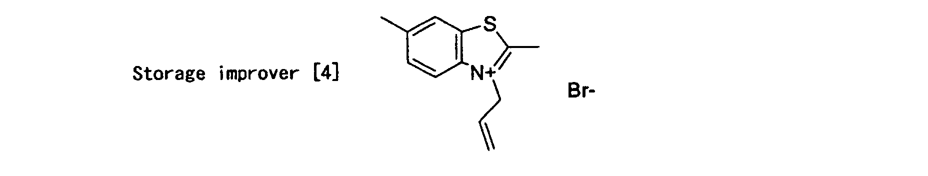

### 3. Preparation of coating solution for surface protective layer for emulsion layer

A vessel was warmed at 40°C, and the additives in the composition mentioned below were added to prepare a coating solution.

| (Composition of coating solution for surface protective layer for emulsion layer) | |
|---|---|
| a. Gelatin | 100 g |
| b. Polyacrylamide (molecular weight: 40,000) | 12 g |
| c. Polystyrenesulfonate Na (molecular weight: 600,000) | 0.6 g |
| d. N,N'-Ethylenebis(vinylsulfoneacetamide) | 2.2 g |
| e. Poly(methyl methacrylate) microparticles (average particle size: 2.0 *µ*m) | 2.7 g |
| f. Sodium t-octylphenoxyethoxyethanesulfonate | 1.8 g |
| g. C₁₆H₃₃O-(CH₂CH₂O)₁₀-H | 4.0 g |
| h. Sodium polyacrylate | 6.0 g |
| i. C₈F₁₇SO₃K | 70 mg |
| j. C₈F₁₇SO₂N(C₃H₇)(CH₂CH₂O)₄(CH₂)₄-SO₃Na | 70 mg |
| k. NaOH (1 N) | 6 mL |
| l. Methanol | 90 mL |
| m. Antifoggant compound X | 0.06 g |

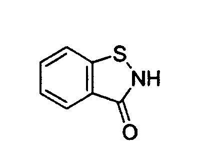

### 4. Preparation of coating solution for back layer

A vessel was warmed at 40°C, and the additives in the composition mentioned below were added to prepare a coating solution for back layer.

| (Composition of coating solution for back layer) | |
|---|---|
| a. Gelatin | 100 g |
| b. Dye [A, Compound 1 of the present invention] | 4.2 g |
| c. Sodium polystyrenesulfonate | 1.2 g |
| d. Poly(ethyl acrylate/methacrylic acid) latex | 5 g |
| e. N,N'-Ethylenebis(vinylsulfoneacetamide) | 4.8 g |
| f. Antifoggant compound X | 0.06 g |
| g. Dye [B] | 0.3 g |
| h. Dye [C] | 0.05 g |
| i. Colloidal silica | 15 g |

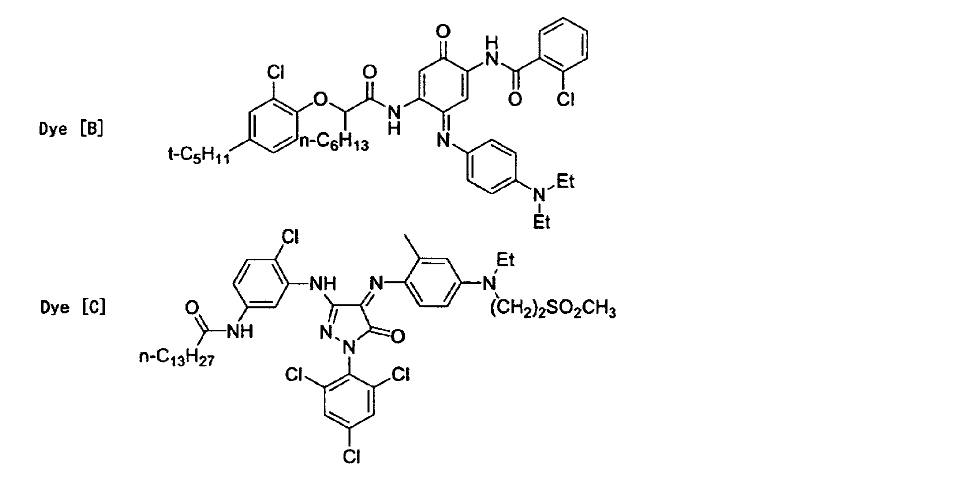

### 5. Preparation of coating solution for back surface protective layer

A vessel was warmed at 40°C, and the additives in the composition mentioned below were added to prepare a coating solution.

| (Composition of coating solution for back surface protective layer) | |
|---|---|
| a. Gelatin | 100 g |
| b. Sodium polystyrenesulfonate | 0.5 g |
| c. N,N'-Ethylenebis(vinylsulfoneacetamide) | 1.9 g |
| d. Poly(methyl methacrylate) microparticles (average particle size: 4.0 *µ*m) | 4 g |
| e. Sodium t-octylphenoxyethoxyethanesulfonate | 2.0 g |
| f. NaOH (1 N) | 6 mL |
| g. Sodium polyacrylate | 2.4 g |
| h. C₁₆H₃₃O-(CH₂CH₂O)₁₀-H | 4.0 g |
| i. C₈F₁₇SO₃K | 70 mg |
| j. C₈F₁₇SO₂N(C₃H₇)(CH₂CH₂O)₄(CH₂)₄-SO₃Na | 70 mg |
| k. Methanol | 150 mL |
| l. Antifoggant compound X | 0.06 g |

### 6. Preparation of photographic material

The aforementioned coating solution for back layer surface protective layer was coated together with the aforementioned coating solution for back layer on a polyethylene terephthalate support in such an amount that the total coated gelatin amount should become 3 g/m². Subsequently, on the opposite side of the support, the aforementioned coating solution for emulsion layer and coating solution for surface protective layer were coated in such amounts that the coated amount of Ag should become 2.3 g/m² and the coated gelatin amount in the surface protective layer should become 1 g/m² (Photographic material 1). Furthermore, Photographic material 2 was prepared in the same manner except that a compound of the present invention

### (Compound 1) was used instead of Dye [A] in the same mass.

Photographic materials 1 to 4 were exposed for 10⁻⁷ second by scanning using a semiconductor laser emitting a light of 783 nm and developed by using a roller transportation type automatic processor with Developer [I] and Fixer [I] mentioned below. The times for development, fixing, washing with water, and drain and desiccation were 7 seconds, 7 seconds, 4 seconds and 11 seconds, respectively. The transportation speed was 3000 mm/minute.

| Composition of Developer [I] | |
|---|---|
| Potassium hydroxide | 29 g |
| Sodium sulfite | 31 g |
| Potassium sulfite | 44 g |
| Ethylenetriaminetetraacetic acid | 1.7 g |
| Boric acid | 1 g |
| Hydroquinone | 30 g |
| Diethylene glycol | 29 g |
| 1-Phenyl-3-pyrazolidone | 1.5 g |
| Glutaraldehyde | 4.9 g |
| 5-Methylbenzotriazol | 60 mg |
| 5-Nitroindazole | 0.25 g |
| Potassium bromide | 7.9 g |
| Acetic acid | 18 g |
| Water | up to 1000 mL |
| pH 10.3 | |

| Composition of Fixer [I] | |
|---|---|
| Ammonium thiosulfate | 140 g |
| Sodium sulfite | 15 g |
| Disodium ethylenediaminetetraacetate dihydrate | 20 mg |
| Sodium hydroxide | 7 g |
| Aluminum sulfate | 10 g |
| Boric acid | 10 g |
| Sulfuric acid | 3.9 g |
| Acetic acid | 15 g |
| Water | up to 1000 mL |
| pH 4.30 | |

Image quality was evaluated according to five-level evaluation criteria from 1 (there are many fringes and image quality is very bad) to 5 (there is no fringe and a sharp image is obtained). Residual color was evaluated according to five-level evaluation criteria from 1 (very much residual color remains) to 5 (there is no residual color). As a result, Photographic material 1 (containing Compound 1 of the present invention) gave results of level 5 for image quality and level 4 for residual color after processing. From these results, it is clearly understood that a silver halide photographic light-sensitive material containing the compound of the present invention has advantageous effects in that the material gives images with excellent quality after exposure with a light having a wavelength of infrared region and development, and gives little reduced residual color after development.

### Industrial Applicability

The compounds of the present invention are useful for production of silver halide photographic light-sensitive materials, and they can be incorporated in, for example, a hydrophilic colloid layer and the like When the compounds of the present invention are used, silver halide photographic light-sensitive materials can be provided which give images with favorable quality and reduced residual color after development after light exposure at a wavelength of the infrared region and development.

## Claims

1. A compound represented by the following general formula (I) or a salt thereof: 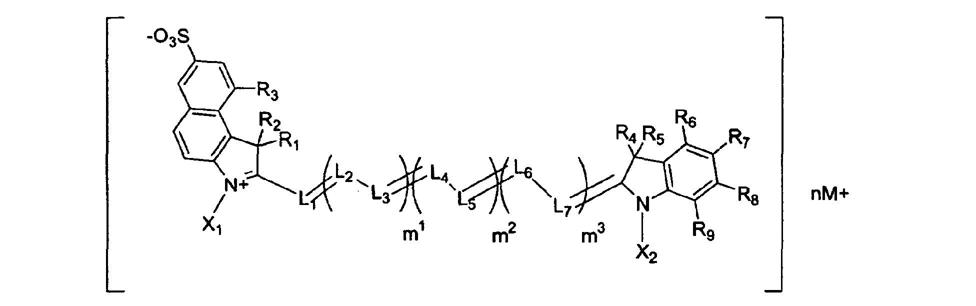 wherein R¹, R², R⁴, and R⁵ independently represent a substituted or unsubstituted alkyl group having 1 to 10 carbon atoms or a substituted or unsubstituted aryl group, and R¹ and R² and/or R⁴ and R⁵ may bind to each other to form a ring; R³ represents hydrogen atom or sulfo group; R⁶, R⁷, R⁸, and R⁹ independently represent hydrogen atom, a halogen atom, a substituted or unsubstituted alkyl group having 1 to 6 carbon atoms, a substituted or unsubstituted alkoxyl group having 1 to 6 carbon atoms, a substituted or unsubstituted amino group, nitro group or cyano group, and two of adjacent groups selected from the group consisting of R⁶, R⁷, R⁸, and R⁹ may bind to each other to form a ring; X¹ and X² independently represent a substituted or unsubstituted alkyl group having 1 to 10 carbon atoms or a substituted or unsubstituted aryl group; m¹ represents 0 or 1; m² represents 0 or 1; m³ represents 0 or 1; L¹, L², L³, L⁴, L⁵, L⁶, and L⁷ independently represent a substituted or unsubstituted methine group, and when two or more of methine groups among the aforementioned methine groups have a substituent, the substituents may bind to each other to form a ring; M represents hydrogen atom, a metal or a quaternary ammonium salt; and n represents an integer of 1 to 7 required to neutralize a charge.

2. The compound or a salt according to claim 1, wherein m¹, m², and m³ all represent 1.

3. The compound or a salt according to claim 1 or 2, wherein R³ is sulfo group.

4. The compound or a salt according to any one of claims 1 to 3, wherein at least one of L¹, L², L³, L⁴, L⁵, L⁶, and L⁷ is a methine group having a substituent.
